# FASCICULE DE BREVET EUROPEEN

(11) **EP 3 292 029 B1**
(45) Date de publication et mention de la délivrance du brevet: **20.03.2019**
(21) Numéro de dépôt: 16723304.8
(22) Date de dépôt: 04.05.2016
(51) Int. Cl.: B60T 5/00, B64C 25/42, F16D 65/847

(54) **SYSTÈME DE FREIN**
BREMSSYSTEM
BRAKE SYSTEM

(30) Priorité: 06.05.2015 FR 1554083
(43) Date de publication de la demande: 14.03.2018
(73) Titulaire: Commissariat à l'Énergie Atomique et aux Énergies Alternatives, 75015 Paris (FR)
(72) Inventeur: GRUSS, Jean-Antoine, 38170 Seyssinet (FR); DUCROS, Frédéric, 38120 Fontanil (FR)
(74) Mandataire: Hautier, Nicolas
(86) Numéro de dépôt international: PCT/EP2016/060108
(87) Numéro de publication internationale: WO 2016/177844

(56) Documents cités:
- EP-A1- 0 555 822
- EP-A1- 2 503 176
- FR-A1- 2 990 188
- US-A- 2 552 571
- US-A- 4 130 187
- US-A- 5 002 342
- US-A- 5 199 536
- US-A1- 2005 224 634

## Description

### DOMAINE TECHNIQUE DE L'INVENTION

La présente invention concerne le domaine des systèmes de freins et plus particulièrement un système de refroidissement de frein. On trouvera pour application particulièrement avantageuse mais non limitative le domaine des freins pour roue ou essieu par exemple d'aéronef.

### ÉTAT DE LA TECHNIQUE

Le refroidissement des freins dans le domaine du transport aérien est un facteur important dans le temps imparti à chaque procédure de vol. Sur les aéronefs, le temps de refroidissement des freins est un paramètre majeur des protocoles de sécurité. En effet, il est nécessaire que la température des freins soit inférieure à une certaine valeur avant que l'aéronef soit autorisé à effectuer une procédure de décollage par exemple.

La majeure partie des systèmes de freinage actuels utilisent des disques en carbone-carbone. Les disques de freins peuvent atteindre des températures de l'ordre de 1000°C en fonctionnement, or un abaissement de la température entre 300°C et 800°C est nécessaire afin qu'ils puissent assurer un bon freinage.

Le refroidissement peut être assuré essentiellement lorsque le véhicule avance par ventilation d'air dans les disques carbone-carbone par l'intermédiaire de trous radiaux, percés sur leur surface. La pression de l'air est alors générée par une écope placée face au mouvement de l'aéronef, ou par une turbine intégrée sur l'axe de la roue.

De même, on connait du document US 4130187 un système conçu pour protéger et refroidir les éléments d'une roue d'aéronef.

Toutefois, ces systèmes existants de refroidissement présentent de nombreux inconvénients. En effet, ils fonctionnent essentiellement lorsque le véhicule est en déplacement puisque c'est la rotation de la roue qui génère le flux d'air servant au refroidissement. De plus le perçage de trous dans les disques carbone-carbone les fragilise impliquant des soucis de maintenance et de sécurité.

De part ces inconvénients, le temps de refroidissement des freins actuels est long, typiquement de 30 minutes à 1 heure, impliquant alors une limitation à la rotation rapide des avions.

La présente invention a pour objectif de réduire, voire de supprimer, certains au moins de ces inconvénients.

### RÉSUMÉ DE L'INVENTION

Selon un premier aspect, la présente invention concerne un système comprenant un rotor comprenant un corps destiné à être entrainé en rotation autour d'une direction longitudinale, le système comprenant également un frein comprenant au moins un élément de friction fixe destiné à être solidaire d'un stator et au moins un élément de friction mobile solidaire du rotor et logé à l'intérieur du corps, les éléments de friction fixe et mobile présentant chacun au moins une face principale et au moins une tranche, une face principale de l'élément de friction mobile étant disposée au regard d'une face principale de l'élément de friction fixe, le frein étant configuré de manière à ce qu'au moins lorsque le frein est activé lesdites faces principales en regard soient en contact de manière à générer une friction;
caractérisé en ce que le système comprend au moins un dispositif de refroidissement comprenant au moins :
- une première partie formant un anneau conducteur centré sur la direction longitudinale, de préférence disposée entre le rotor et les éléments de friction fixe et mobile, disposée au regard des tranches des éléments de friction fixe et mobile et configurée pour capter par rayonnement et/ou convection de la chaleur générée lors de la friction par les éléments de friction fixe et mobile, et
- une deuxième partie, solidaire et thermiquement couplée avec la première partie, décalée selon la direction longitudinale par rapport aux éléments de friction fixe et mobile de manière à ne pas être au regard de la tranche des éléments de friction fixe et mobile et configurée pour évacuer par convection et/ou rayonnement vers l'air ambiant la chaleur captée par la première partie.

Suivant un autre aspect de modes de réalisation de l'invention, est présenté un système comprenant un rotor comprenant un corps destiné à être entrainé en rotation autour d'une direction longitudinale, le système comprenant également un frein comprenant au moins un élément de friction fixe destiné à être solidaire d'un stator et au moins un élément de friction mobile solidaire du rotor et logé à l'intérieur du corps, les éléments de friction fixe et mobile présentant chacun au moins une face principale et au moins une tranche, une face principale de l'élément de friction mobile étant disposée au regard d'une face principale de l'élément de friction fixe, le frein étant configuré de manière à ce qu'au moins lorsque le frein est activé lesdites faces principales en regard soient en contact de manière à générer une friction.

Le système peut comprendre en outre au moins un dispositif de refroidissement comprenant au moins :
une première partie disposée entre le corps et les éléments de frictions fixe et mobile, disposée au regard des tranches des éléments de friction fixe et mobile et configurée pour capter par rayonnement et/ou convection de la chaleur générée par les éléments de friction fixe et mobile lors de la friction, et
une deuxième partie, solidaire et thermiquement couplée avec la première partie, décalée selon la direction longitudinale par rapport au corps et aux éléments de frictions fixe et mobile de manière à ne pas être au regard de la tranche des éléments de frictions fixe et mobile et configurée pour évacuer par convection et/ou rayonnement vers l'air ambiant la chaleur captée par la première partie.

Ainsi, la première partie du dispositif de refroidissement absorbe une partie au moins de la chaleur générée par les éléments de friction, typiquement des disques.

La première partie fait ainsi office de zone d'absorption de chaleur.

La première partie transfère cette chaleur à la deuxième partie, qui elle n'est pas au regard des disques. Cette deuxième partie ne reçoit donc pas de chaleur des disques.

La deuxième partie transfert, vers l'extérieur du système, la chaleur reçue depuis la première partie. Cette deuxième partie fait ainsi office de zone d'évacuation de l'énergie.

L'invention permet ainsi d'évacuer très efficacement la chaleur générée lors du freinage.

La présente invention permet une bien meilleure évacuation de la chaleur que des disques Carbone/Carbone percés, avantageusement dans la phase où le véhicule est à l'arrêt.

Le refroidissement est donc globalement plus rapide et le frein peut fonctionner dans la plage de température dans laquelle il est efficace. Le freinage est par conséquent amélioré.

De manière particulièrement avantageuse, le dispositif de refroidissement permet de refroidir le frein même à l'arrêt, c'est-à-dire lorsque le rotor ne tourne pas.

Par ailleurs, le temps de refroidissement des freins étant amoindri de manière significative, cela permet une reprise de l'utilisation plus rapide des véhicules tels que les avions par exemple après une phase de fonctionnement du frein. La fréquence de rotation des avions est donc améliorée grâce à l'invention.

En outre l'invention permet de conserver des éléments de frictions pleins, typiquement des disques pleins sans perçage. L'invention offre donc une robustesse améliorée par rapport aux freins avec disques percés qui s'avèrent en pratiques très fragiles.

Par ailleurs, la présente invention est compacte. Intégré dans une roue, ce système ne représente que peu de matière ajoutée à la roue. Ainsi, dans un domaine comme l'aéronautique ou l'automobile où la charge est un facteur clef, l'utilisation de la présente invention est un avantage de par sa faible masse. Sa compacité permet son installation aisée dans les systèmes actuels.

La présente invention dispose d'un avantage certain au regard de son adaptabilité relativement à divers domaines applicatifs. En effet que cela soit dans ses dimensions et/ou les matériaux utilisés, il est possible d'implémenter la présente invention à des systèmes de freins préexistants.

Un autre aspect de la présente invention concerne un dispositif de refroidissement pour frein à disques, le dispositif s'étendant selon une direction longitudinale et comprenant :
- une première partie configurée pour envelopper les disques du frein, destinée à être disposée au regard des tranches des disques du frein et configurée pour capter par rayonnement et/ou convection de la chaleur générée par les disques lors de la friction, et
- une deuxième partie, solidaire et thermiquement couplée avec la première partie, décalée selon la direction longitudinale par rapport à la première partie, munie d'ailettes s'étendant radialement par rapport à la direction longitudinale et configurée pour évacuer par convection et/ou rayonnement vers l'air ambiant la chaleur captée par la première partie.

Un autre aspect de la présente invention concerne un essieu de véhicule équipé d'un système selon la présente invention.

Un autre aspect de la présente invention concerne un avion ou véhicule roulant équipé d'un système selon la présente invention.

Enfin, un autre aspect de la présente invention concerne une machine tournante comprenant un arbre tournant couplé à un système selon la présente invention, la machine étant de préférence prise parmi : une génératrice, un ralentisseur, un moteur.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
- la FIGURE 1 est une coupe longitudinale d'un système selon un exemple de réalisation de l'invention, le système recevant pour application, dans cette application non limitative, un frein à disques.
- la FIGURE 2 est une vue en perspective du dispositif de refroidissement équipant le système illustré en figure 1,
- la FIGURE 3 représente un autre exemple de dispositif de refroidissement selon la présente invention et comportant un caloduc.
- la FIGURE 4 représente le circuit d'un caloduc pulsé équipant le dispositif de refroidissement illustré en figure 3. Sur cette vue, le dispositif de refroidissement est représenté à plat.
- la FIGURE 5 représente une vue d'une moitié d'un dispositif de refroidissement comprenant un caloduc pulsé avec les zones chaudes excentrées vers l'extérieur et concentrique à la zone froide.
- la FIGURE 6 représente une vue d'une moitié d'un dispositif de refroidissement comprenant un caloduc pulsé avec les zones chaudes excentrées et déployées en éventail.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE DE L'INVENTION

Avant d'entrer dans le détail de modes de réalisation préférés notamment en référence aux figures, on énonce ci-après différentes options que peut préférentiellement mais non limitativement présenter l'invention, ces options pouvant être mises en oeuvre, soit séparément, soit suivant toute combinaison entre elles :
- Avantageusement, le dispositif de refroidissement est distinct du corps.
- Avantageusement, le dispositif de refroidissement est solidaire du corps et rapporté sur le corps.
- Avantageusement, le dispositif de refroidissement est solidaire du corps.
- Avantageusement, le dispositif de refroidissement est rapporté sur le corps.
- Avantageusement, le système comporte des clavettes d'entrainement des éléments de frictions.
   Ainsi, le dispositif de refroidissement est couplé en rotation avec la pluralité de disques solidaires du rotor.
   Cela permet d'accroitre la pression de l'air ambiant au niveau de la première partie, d'augmentant ainsi les échanges thermiques par convection entre les disques et le dispositif de refroidissement.
- Avantageusement, le corps présente une face interne tournée au regard des éléments de friction et au moins un élément de friction solidaire du rotor est relié mécaniquement à ladite face interne.
- Avantageusement, le dispositif de refroidissement est solidaire des disques de freins mobiles.
- Avantageusement, le rotor est au regard du stator.
- Avantageusement, le rotor est situé autour du stator.
- Avantageusement, le système comporte au moins une clavette d'entrainement des éléments de frictions, l'au moins une clavette étant solidaire de la face interne du corps et de l'au moins un élément de friction solidaire du rotor et dans lequel le dispositif de refroidissement comporte au moins une ouverture traversée par la clavette.
- Avantageusement et selon un mode de réalisation alternatif l'au moins un élément de friction solidaire du rotor est reliée mécaniquement à un arbre solidaire du corps.
- Avantageusement et selon un mode de réalisation alternatif le dispositif de refroidissement est solidaire du stator.
- Avantageusement, le système comporte des clavettes d'entrainement des éléments de frictions, les clavettes étant solidaire de l'arbre et de l'au moins un élément de friction solidaire du rotor.
- Avantageusement, le dispositif de refroidissement est solidaire du stator.
- Avantageusement, chaque élément de friction présente deux faces principales et au moins une tranche, les éléments de friction étant disposées de manière à ce que deux éléments de friction adjacents, l'un solidaire du stator et l'autre solidaire du rotor aient leurs faces principales en regard.
- Avantageusement, les éléments de frictions sont des disques.
- Avantageusement, le frein est un frein à disques.
- Avantageusement, le corps présente une face externe formant une surface de réception pour une bande de roulement, tel qu'un pneu.
- Avantageusement, la première partie est longitudinalement disposée au droit de la surface de réception.
- Avantageusement, le corps est une jante de roue.
- Avantageusement, la première partie présente une surface extérieure revêtue d'un écran thermique.
   L'utilisation d'un écran thermique permet de protéger efficacement le corps et par exemple un pneu monté sur le corps du rayonnement thermique émis par la première partie ayant absorbée de la chaleur produite par les disques. Cette protection des pneus est ainsi avantageuse pour des questions de sécurité et prolonge la durée de vie des pneus.
- Avantageusement, l'écran thermique est composé d'un matériau ou d'une combinaison de matériaux pris parmi les matériaux suivants : aciers inoxydables, alliages d'aluminium.
   L'utilisation de ce matériau permet de disposer d'un écran thermique efficace et résistant tout en conservant un rapport protection/poids adapté pour les besoins applicatifs de la présente invention.
- Avantageusement, le dispositif de refroidissement est monté en rotation par rapport à au moins un élément de friction fixe et dans lequel la première partie comprend une pluralité d'aubes s'étendant depuis la première partie et en direction des éléments de friction et augmentant la surface d'échange par convection et/ou rayonnement entre les éléments de friction et la première partie du dispositif de refroidissement.
   L'utilisation d'une pluralité d'aubes permet d'aider partiellement ou complètement la circulation de l'air ambiant servant à refroidir les éléments de frictions, typiquement des disques de freins, pendant les phases de déplacement du véhicule. De plus cela permet un brassage de l'air ambiant et un meilleur couplage thermique entre les disques de freins et le dispositif de refroidissement.
   La rotation du dispositif de refroidissement permet d'accroitre la pression de l'air ambiant au niveau des aubes.
- Avantageusement, les éléments de friction sont des disques et dans lequel le rapport entre le diamètre des disques et la distance séparant la pluralité d'aubes des disques est compris entre 20 et 200, avantageusement entre 50 et 100 et de préférence égale à 80.
   Cela permet de créer un courant d'air ambiant entre les disques de freins et les aubes afin de refroidir très efficacement par convection les disques de freins. Par ailleurs, les aubes absorbent par rayonnement la chaleur des disques.
- Avantageusement, la première partie et la deuxième partie forment deux cylindres coaxiaux couplés thermiquement.
- Avantageusement, la première et la deuxième partie forment une pièce monolithique.
- Avantageusement, la première et la deuxième partie sont formées d'un unique matériau.
- Avantageusement et selon un mode de réalisation, le système comprend un système caloduc configuré pour évacuer vers la deuxième partie la chaleur captée par la première partie.
- Avantageusement, l'au moins un dispositif de refroidissement comprend au moins un matériau parmi les matériaux suivants : alliage d'aluminium, aciers inoxydables, titane, cuivre, superalliages à base de nickel.
   Ces matériaux présentent des propriétés de conducteurs thermiques en adéquation avec les propriétés mécaniques nécessaire pour les domaines applicatifs de la présente invention.
- Avantageusement, le dispositif de refroidissement comprend du graphite pyrolytique.
- Avantageusement, le dispositif de refroidissement comprend du graphite pyrolytique encapsulé dans un matériau métallique.
   Cela permet de renforcer la robustesse du dispositif.
- Avantageusement, la présente invention comprend un caloduc comprenant au moins un canal à l'intérieur duquel circule un fluide caloporteur, le canal s'étendant dans les première et deuxième parties du dispositif de refroidissement, la première partie présente au moins une portion proximale située au niveau du couplage entre la première et la deuxième parties, et une portion distale située à l'extrémité de la première partie opposée à la portion proximale, le caloduc étant configuré de manière à permettre d'évacuer vers la deuxième partie la chaleur captée par la première partie..
   La portion distale fait ainsi office de zone chaude et la portion proximale fait ainsi office de zone froide.
   La présence de ces deux zones permet la formation d'un flux de chaleur et ainsi d'évacuer la chaleur.
   L'utilisation d'un caloduc présente de nombreux avantages comme la gamme de températures adaptable aux besoins applicatifs, simplicité et faible coût de production, et une grande fiabilité de fonctionnement.
- Avantageusement, le dit caloduc est un caloduc pulsé.
   L'utilisation d'un caloduc pulsé présente de nombreux avantages comme la gamme de températures adaptable aux besoins applicatifs, simplicité et faible coût de production, et une grande fiabilité de fonctionnement.
   L'utilisation d'un caloduc pulsé est particulièrement avantageuse par rapport à un caloduc classique du fait du faible diamètre de l'enveloppe qui confère au caloduc pulsé une grande compacité d'une part, et une résistance mécanique très élevée pour résister aux pressions élevées dues au fluide caloduc.
- Avantageusement, les zones froides sont plus proches de la deuxième partie que les zones chaudes.
   Cela permet d'évacuer la chaleur loin des disques de freins.
- Avantageusement, le caloduc présente plusieurs canaux radialement répartis sur toute la surface de la première partie au moins.
   Cela permet de faire le tour du dispositif de refroidissement et ainsi de bénéficier d'un maximum de surface en contact thermique avec les disques de freins.
- Avantageusement, le caloduc est solidaire du rotor, typiquement de la roue lorsque le rotor est solidaire d'une roue.
- Avantageusement, le caloduc est solidaire des éléments de friction mobiles, c'est à dire des disques de frein mobiles.
- Avantageusement, le caloduc est solidaire de la roue et des disques de frein mobiles.
   Cela permet d'assister le retour du fluide caloduc de la zone froide vers la zone chaude par effet centrifuge.
- Avantageusement, les canaux sont radialement répartis sur toute la surface de la deuxième partie au moins.
- Avantageusement, le caloduc est monté en rotation au moins par rapport à au moins un élément de friction fixe.
- Avantageusement, le dispositif de refroidissement est solidaire du stator, le caloduc étant ainsi entrainé en rotation lors de la rotation du des éléments de friction mobile.
- Avantageusement, la portion distale est radialement plus éloignée de l'axe de rotation du rotor que la portion proximale.
   Ainsi les zones chaudes sont excentrées vers l'extérieur par rapport aux zones froides. Cela permet de faciliter le retour des bouchons liquide de la zone froide vers les zones chaudes grâce aux forces centrifuges lorsque le dispositif de refroidissement est en rotation.
- Avantageusement, les première et deuxième portions du caloduc sont arrangées de manière concentrique.
- Avantageusement, les zones chaudes sont déployées en éventail vers l'extérieur par rapport aux zones froides de manière à assister le retour du liquide jusqu'aux extrémités de la zone chaude.
   Ce déploiement en éventail de la zone chaude correspond à une forme conique de la première partie du dispositif de refroidissement selon sa direction longitudinale de sorte à présenter un diamètre grandissant dans la direction s'éloignant de la deuxième partie.
   Cela permet de capter un maximum de chaleur générée par les freins et ainsi de concentrer cette chaleur vers les zones froides pour l'évacuer ensuite vers la deuxième partie.
- Avantageusement, le caloduc pulsé comprend au moins un capillaire ou canal dont la longueur est comprise entre 100 et 800 mm, avantageusement entre 200 et 600 mm, et de préférence égale à 350 mm, dont le diamètre est compris entre 0.5 mm et 4 mm, avantageusement égal à 2 mm.
   Cela permet de disposer d'une très grande surface d'échange thermique entre les disques de freins et le caloduc pulsé de sorte à augmenter l'évacuation de la chaleur.
- Avantageusement, ledit au moins un capillaire ou canal comprend des sections coudées. Cela permet de disposer d'une très grande surface d'échange thermique entre les disques de freins et le caloduc pulsé de sorte à augmenter l'évacuation de la chaleur. Cela permet également d'accroitre le nombre de canaux de circulation de la chaleur dans le dispositif.
- De préférence le caloduc pulsé comprend une pluralité de capillaires. Cela permet de disposer d'une très grande surface d'échange thermique entre les disques de freins et le caloduc pulsé de sorte à augmenter l'évacuation de la chaleur. Cela permet également d'accroitre le nombre de canaux de circulation de la chaleur dans le dispositif.
- Avantageusement, le caloduc comprend une pluralité de canaux et dans lequel les canaux sont noyés dans l'épaisseur de la première partie.
- Avantageusement, le caloduc comprend une pluralité de canaux et dans lequel les canaux sont rapportés sur une face interne des première et deuxième parties du dispositif de refroidissement.
- Avantageusement, les capillaires sont disposés sur la face de la première partie qui est tournée au regard des disques, alternativement, les capillaires sont disposés sur la face opposée, avantageusement, les capillaires sont noyés dans l'épaisseur de la première partie.
   Cela permet de rendre le caloduc pulsé beaucoup plus robuste en cas de haute pression à l'intérieur de celui-ci par rapport à un caloduc classique présentant des canaux de diamètre plus important.
- Avantageusement, la deuxième partie comprend au moins un élément dissipateur de chaleur pris parmi : une pluralité d'ailettes, une pluralité de picots et tout élément conducteur de chaleur de forme géométrique quelconque, et dans lequel la conductivité thermique dudit élément dissipateur de chaleur est supérieure à 150 W/m.K.
   Cela permet d'augmenter de manière significative la surface d'échanges thermiques entre le dispositif de refroidissement et l'air ambiant de sorte à permettre une évacuation plus rapide de la chaleur par convection et éventuellement par rayonnement.
- Avantageusement, les éléments dissipateur de chaleur comprennent des d'ailettes formées dans au moins un matériau pris parmi les matériaux suivants : alliage d'aluminium, cuivre, aciers inoxydables, cuivre, superalliages base nickel et tous type de métaux. Elles peuvent comprendre une âme en graphite pyrolytique encapsulé dans un métal afin d'accroitre leur conductivité thermique.
- De préférence les ailettes sont réalisées dans le même matériau que la deuxième partie.
   Elles sont par exemple soudées ou brasées sur un anneau ou un tube formant la deuxième partie.
- Avantageusement, la première partie forme un tube présentant des discontinuités sous formes d'ouvertures s'étendant selon une direction parallèle à l'axe de rotation du rotor. Ces ouvertures permettent le passage de pièces permettant la solidarisation mécanique des disques mobiles et de la jante.
- Avantageusement, l'éloignement radial de la portion distale par rapport à l'axe de rotation du rotor augmente le long de l'axe de rotation du rotor au fur et à mesure que l'on s'éloigne de la portion proximale.
   Cela permet d'augmenter l'effet de la force centrifuge qui entraine plus efficacement le fluide caloduc froid vers les parties chaudes du dispositif de refroidissement.
- Avantageusement, la première partie présente une forme conique formant un angle non nul avec l'axe de rotation du rotor.
   Cela permet d'augmenter l'effet de la force centrifuge qui entraine plus efficacement le fluide caloduc froid vers les parties chaudes du dispositif de refroidissement. Par ailleurs cette configuration tend à forcer la circulation du fluide jusqu'à l'extrémité distale du caloduc.
- Avantageusement, la deuxième partie est décalée longitudinalement par rapport au corps.
- Avantageusement, la deuxième partie est décalée longitudinalement par rapport aux éléments de friction fixe et/ou mobile.
- Avantageusement, la deuxième partie est décalée longitudinalement par rapport au rotor.
- Avantageusement, la première partie est distincte du support situé entre les disques mobiles et le corps.
- Avantageusement, les disques mobiles et le corps forment une pièce monolithique.
- Avantageusement, les disques mobiles sont fixés sur une face interne du corps.
- Avantageusement, le frein est situé en regard du corps.
- Avantageusement, le frein est situé entièrement en regard du corps selon une direction longitudinale.
- Avantageusement, le corps présente une face externe formant une surface de réception configurée pour accueillir un élément mobile recouvrant longitudinalement au moins une partie du corps.
- Avantageusement, la deuxième partie est au moins en partie décalée longitudinalement par rapport à ladite surface de réception.
   Cela permet de dissiper la chaleur plus efficacement sans réémission de chaleur en direction de l'élément mobile supporté par ladite surface de réception.
- Avantageusement, l'élément mobile est pris parmi au moins : une bande de roulement, tel qu'un pneu, une courroie ou une roue dentée.
- Avantageusement, le rapport entre la longueur de la deuxième partie et la longueur de la première partie est supérieur ou égal à 0.2, de préférence supérieur ou égal à 0.5, et avantageusement supérieur ou égal à 1.
- Le dispositif de refroidissement est en regard des éléments de friction.

Une description générale de l'invention va maintenant être présentée. Puis des détails de réalisation seront décrits en référence aux figures. Par défaut, on entend par longitudinalement ou direction longitudinale, l'axe de l'arbre de rotation du rotor.

La présente invention concerne un système de refroidissement de frein. De manière avantageuse, mais non limitative, ce système de refroidissement est destiné à équiper un frein dont le freinage est obtenu par friction d'un élément de friction solidaire d'un stator avec d'un élément de friction solidaire d'un rotor. Le rotor tourne autour d'un axe s'étendant selon une direction longitudinale.

Typiquement, les éléments de friction sont des disques, par exemple des disques en carbone.

Ce système de refroidissement comprend une première partie placée à la périphérie des disques de freins. Cette première partie est ainsi placée au regard de la tranche des disques.

Cette première partie est configurée pour capter la chaleur dégagée par les disques lors du freinage, mais également lorsque les disques mobiles ne tournent pas.

Cette première partie présente une forme générale de tube ou d'anneau, portant éventuellement des ouvertures comme cela sera décrit par la suite. De préférence la première partie présente généralement une symétrie de révolution autour de l'axe du rotor, à l'exception éventuelle d'ouvertures qui seront décrites par la suite.

Le système de refroidissement comprend également une deuxième partie qui n'est pas placée au regard de la tranche des disques. Cette deuxième partie n'est pas non plus placée au regard de la face des disques. Cette deuxième partie est ainsi déportée à distance des disques sans recevoir ou sans recevoir beaucoup du rayonnement de chaleur depuis les disques.

Cette deuxième partie présente également une forme générale d'anneau. De préférence cette deuxième partie présente également une symétrie de révolution autour de l'axe du rotor.

Les disques forment un espace défini par :
- deux surfaces parallèles extérieures, typiquement les faces principales des disques disposés aux extrémités de la série de disques, et
- une enveloppe circulaire, définie par la tranche des disques et formant typiquement une paroi cylindrique.

Ainsi la pluralité de disques est comprise à l'intérieur de cet espace. La première partie du dispositif de refroidissement est disposée au regard de l'enveloppe circulaire afin de capter par rayonnement et/ou convection la chaleur générée par les disques.

La deuxième partie est quant à elle disposée en dehors de l'espace se trouvant à l'extérieur et au regard de l'enveloppe circulaire. Par ailleurs la deuxième partie est située en dehors de l'espace se trouvant à l'extérieur et au regard de l'enveloppe deux surfaces parallèles extérieures. Elle ne reçoit ainsi pas directement ou que peu de la chaleur générée par les disques.

La première et la deuxième partie sont couplées thermiquement. En particulier, la première partie peut transférer jusqu'à la deuxième partie la chaleur qu'elle aura absorbé depuis les disques par rayonnement et/ou convection.

La première et la deuxième partie sont solidaires. Elles présentent de préférence une continuité de matière ce qui améliore leur échange thermique par conduction.

Avantageusement, la chaleur est transférée axialement depuis la première partie vers la deuxième partie formant une zone externe et/ou zone d'extension de surface du dispositif de refroidissement.

De préférence l'ensemble formé par les première et deuxième parties forme un anneau conducteur de chaleur. Cet anneau est ainsi disposé en périphérie des disques.

Cet anneau permet de transférer vers l'air ambiant la chaleur générée par les disques.

Afin de permettre une meilleure évacuation de la chaleur vers l'air ambiant, cette deuxième patrie comprend des ailettes, par exemple radiales, des picots et plus généralement tout dispositif permettant de développer une surface d'échange thermique importante.

De manière préférentielle et très avantageuse, le transfert de chaleur entre les première et deuxième parties se fait au moins en partie par conduction thermique grâce à un matériau conducteur thermique.

Les matériaux utilisés dans ce type de système ont un impact direct sur l'efficacité des transferts thermiques. Ainsi, selon un mode de réalisation, ceux sont des matériaux dits super conducteurs de chaleur qui peuvent être utilisés dans cette invention. Selon un exemple non limitatif, il peut s'agir de carbone pyrolytique qui comprend des couches de graphène liées par des liaisons covalentes. La conductivité thermique de ce type de matériau peut atteindre 1700 W/m.K. Le carbone pyrolytique est de préférence encapsulé dans des composites à base de métaux pour renforcer mécaniquement ce super conducteur de chaleur.

Selon un mode de réalisation particulièrement avantageux de la présente invention, le transfert de chaleur peut être effectué en partie au moins par l'intermédiaire d'un caloduc.

Un caloduc est un dispositif permettant de transférer de la chaleur par évaporation/condensation d'un fluide à l'intérieur d'une enveloppe. Lorsque la partie chaude de l'enveloppe est située à une position plus élevée que la partie froide ou lorsque l'enveloppe est en apesanteur, des structures internes à l'enveloppe peuvent permettre de ramener les condensats de la paroi froide vers la paroi chaude par capillarité par exemple.

On se référera par exemple aux documents suivant concerna nt le caloduc: Bonjour J., Lefevre F, 2011b, Systèmes diphasiques de contrôle thermique - Thermosiphons et caloducs, Techniques de l'Ingénieur, Vol. BE9545 ; et Reay D., Kew P., 2006, Heat Pipes - Theory, design and applications, Butterworth-Heinemann.

Selon un mode de réalisation préféré, le dispositif de refroidissement de l'invention comporte un type particulier de caloduc, appelé caloduc pulsé ou oscillant. Ce type de caloduc est particulièrement simple et performant. Un caloduc pulsé est un système de transfert thermique diphasique passif composé d'au moins un tube capillaire recourbé sur lui-même en plusieurs « allers-retours » et des sections coudées formant ainsi un réseau de capillaires. Chacune des extrémités du caloduc est respectivement en contact avec une source froide et une source chaude.

Un fluide y est introduit à l'état de saturation avec un taux de remplissage compris entre 30 et 80%, avantageusement entre 40 et 60%, et de préférence égal à 50% du volume du tube. En régime de fonctionnement, des oscillations de bouchons de liquide et de bulles de vapeur apparaissent dans le système à partir du flux thermique suffisant imposé par la source chaude.

Ainsi deux types de transfert interviennent : le transfert de chaleur latente (évaporation du liquide) qui entraine la création de fluctuations de pression et ainsi entraine le déplacement des bouchons de liquide entre la zone d'évaporation et la zone de condensation, et le transfert de chaleur transportée par les bouchons de liquides qui vont échanger de la chaleur entre la zone d'évaporation et la zone de condensation.

Un tel dispositif a de nombreux avantages. En effet, il présente une très grande simplicité de conception impliquant un coût de production faible et une très grande fiabilité. De plus la masse et le volume intervenant dans ce système sont très faibles. Les limites de fonctionnement d'un tel dispositif de transfert thermique sont potentiellement très élevées.

Enfin, de par le manque de modèles prédictifs de compréhension de la physique impliquée dans ces phénomènes de transferts thermiques, et de dimensionnement, peu d'applications existent pour ce type de système.

Selon un mode privilégié de réalisation de la présente invention, le transfert de chaleur depuis les disques de freins vers l'extérieur est effectué par conduction thermique au travers du caloduc pulsé. De manière préférentielle, ce caloduc pulsé est intégré dans l'épaisseur de l'anneau de conduction.

Avantageusement, le caloduc pulsé permet un transfert de chaleur dit par chaleur sensible et par chaleur latente, c'est-à-dire par évaporation et par condensation du fluide caloporteur contenu dans le caloduc pulsé.

Ces modes de réalisation permettent un refroidissement efficace dans des phases dynamiques de fonctionnement du véhicule, c'est-à-dire durant des phases de déplacement lorsque les disques tournent.

La présente invention présente de nombreux autres avantages techniques dont une très grande efficacité thermique, une très grande légèreté et une très grande compacité.

Dans la présente description, on entend par « anneau », un cylindre ou un tube dont la porteuse (son profil transversal) est circulaire et dont l'enveloppe s'étend selon la direction de son axe de révolution et peut ou non présenter des évidements ou des ouvertures.

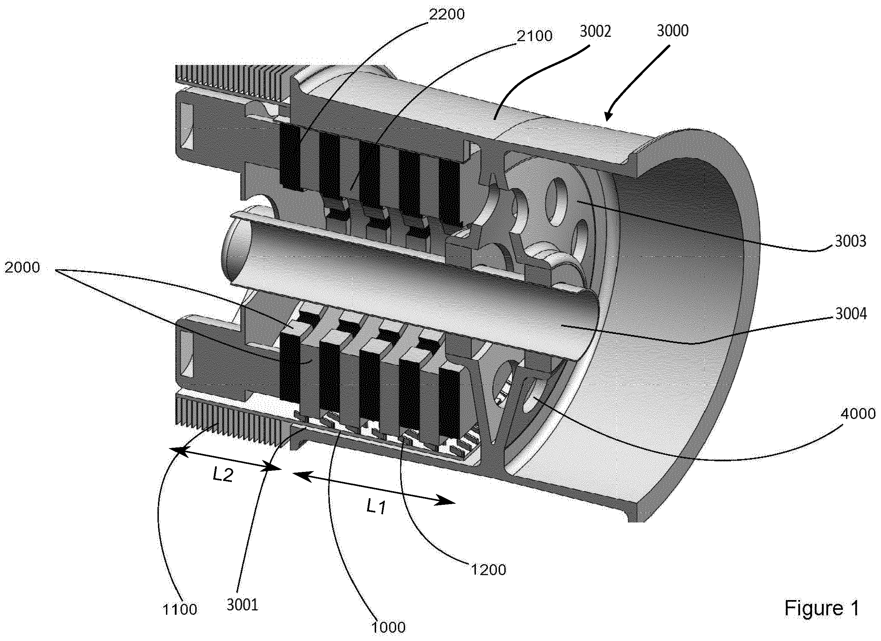

La présente invention va maintenant être décrite en détail par rapport aux figures 1 à 6 qui illustrent un mode de réalisation non limitatif de l'invention.

La figure 1 illustre un mode de réalisation de la présente invention, dans lequel le dispositif de refroidissement selon l'invention équipe un corps 3000 formant une roue de véhicule, pouvant être par exemple un aéronef.

La roue comprend un système de refroidissement de frein à disques selon la présente invention. Des disques 2100 sont mobiles. Ils sont également qualifiés d'élément de frictions fixes. Ils sont entrainés en rotation par un rotor autour de l'axe de de l'arbre de rotation 3004 du rotor, c'est-à-dire ici par le corps 3000 de la roue formant une jante. Des disques fixes 2200, également qualifiés d'élément de friction mobiles, sont solidaires du stator par rapport typiquement au châssis du véhicule.

Le contact des disques fixes 2200 avec les disques mobiles 2100, lorsque la roue est en rotation et en situation de freinage, entraine un échauffement important de ces disques 2000.

Le dispositif de refroidissement formant un anneau conducteur 1000 a alors pour fonction de dissiper cette chaleur, en l'absorbant au niveau de la première partie 1001 puis en la transférant vers la deuxième partie 1002 qui comprend une surface apte à dissiper la chaleur dans l'air ambiant.

Selon un mode de réalisation préféré, le dispositif de refroidissement forme un anneau conducteur 1000 concentrique à l'axe de de l'arbre de rotation 3004 du rotor, c'est-à-dire dont d'axe de révolution est colinéaire à l'axe de de l'arbre de rotation 3004 du rotor.

Selon le mode de réalisation illustré, le dispositif de refroidissement 1000 est placé entre les disques 2000 et le corps 3000 formant ici une jante.

De préférence, la première partie 1001 et/ou la deuxième partie 1002 forme un anneau conducteur autour de l'axe de l'arbre de rotation 3004 du rotor, c'est-à-dire dont d'axe de révolution est colinéaire à l'axe de de l'arbre de rotation 3004 du rotor.

De manière astucieuse et préférée, la première partie 1001 est située entre le rotor et les disques 2000.

Avantageusement, une zone externe de la deuxième partie 1002 comprend des éléments dissipateurs de chaleur. Ces éléments sont conformés pour augmenter la surface d'échange thermique entre la deuxième partie 1002 et l'air ambiant. Par exemple ces éléments dissipateurs sont des ailettes 1100 comme illustré sur les figures 1 à 3. De manière avantageuse, les ailettes 1100 permettent un transfert thermique entre le dispositif de refroidissement 1000 et l'air ambiant par convection et possiblement par rayonnement.

De manière facultative mais avantageuse, le dispositif de refroidissement 1000 formant l'anneau conducteur peut comprendre des dispositifs aptes à transférer le plus efficacement possible la chaleur générée par les disques 2000. Ainsi, le dispositif de refroidissement 1000 peut comprendre, en particulier sur une face interne de sa première partie des aubes 1200. Ces aubes 1200 sont ainsi tournées au regard des disques 2000, 2100.

De même le dispositif de refroidissement 1000 peut comprendre un dispositif de type caloduc 1300, de préférence un caloduc pulsé, configuré pour acheminer la chaleur depuis la première partie 1001 vers la deuxième partie 1002.

Selon un mode de réalisation, les canaux ou capillaires du caloduc sont logés dans l'épaisseur du dispositif de refroidissement, c'est-à-dire entre sa surface extérieure et sa surface intérieure.

Par ailleurs, on peut prévoir des ouvertures 4000 dans la structure mécanique afin de permettre une circulation de l'air ambiant jusqu'aux disques 2100, 2200. Cela permet ainsi un échange thermique plus efficace entre les disques de freins 2000 et l'air ambiant.

De manière préférentielle, le dispositif de refroidissement 1000 est couplé en rotation avec le rotor, c'est-à-dire avec le corps 3000 formant une jante de roue dans cet exemple d'application. Ainsi, le dispositif de refroidissement 1000 subit un mouvement rotatif en même temps que la roue. La mise en rotation du dispositif de refroidissement 1000 permet d'assister la circulation de l'air ambiant grâce aux aubes 1200 ainsi permettant d'accroitre le transfert de chaleur par convection entre les disques 2000 et le dispositif de refroidissement 1000.

Ainsi, durant le mouvement du véhicule, par exemple de l'aéronef, l'air ambiant s'engouffre dans ces ouvertures 4000. L'air entre alors en contact avec les aubes 1200 et le dispositif de refroidissement 1000. Un échange thermique par convection est alors réalisé, l'air se réchauffe alors que la première partie 1001 du dispositif de refroidissement 1000 baisse en température, ainsi que les aubes 1200 et les disques 2000. Les aubes 1200 absorbent également la chaleur des disques par rayonnement. L'air continue de circuler tout le long du dispositif de refroidissement 1000 de sorte à atteindre la deuxième partie 1002 du dispositif de refroidissement 1000 et donc la surface d'échange thermique comprenant par exemple les ailettes 1100. Par ailleurs, parallèlement à ce transfert thermique par convection, le dispositif de refroidissement 1000 formant un anneau de conduction est configuré pour transférer par conduction thermique la chaleur générée par les disques 2000 depuis la première partie 1001 jusqu'à la deuxième 1002.

Les ailettes 1100 forment alors une zone présentant une très grande surface d'échange afin d'améliorer les échange thermiques par convection entre l'air plus froid et les ailettes 1100 plus chaudes, voire par rayonnement avec d'autres éléments environnant.

Lorsque le corps 3000 formant une roue tourne les aubes 1200 permettent d'assister la circulation de l'air ambiant dans l'espace séparant les disques 2000 et le dispositif de refroidissement 1000, espace appelé interstice disques 2000/ anneau conducteur 1000. L'air est alors en convection forcée entre la première partie 1001 du dispositif de refroidissement 1000 et les disques 2000. Cela permet d'une part d'évacuer la chaleur des disques 2000 vers l'extérieur, et d'autre part de transférer efficacement par brassage convectif et rayonnement la chaleur des disques 2000 vers le dispositif de refroidissement 1000.

Selon un mode de réalisation particulier non illustré, le dispositif de refroidissement 1000 peut être couplé à un dispositif de mise en mouvement de l'air ambiant tel que, par exemple, des aubes de turbine ou de ventilateur placées en amont sur l'axe de rotation de la roue.

Lorsque la roue est à l'arrêt, la chaleur résiduelle des disques 2000 se transfère principalement par conduction de l'air se trouvant dans l'interstice disques 2000/ anneau conducteur 1000 et par rayonnement. Le dispositif de refroidissement 1000 transfert la chaleur des disques par conduction depuis la première partie 1001 vers la zone ailetée de la deuxième partie 1002 où elle est évacuée vers l'air ambiant, les ailettes 1100 permettant d'augmenter la surface d'échange thermique vers l'air ambiant.

Cette évacuation des calories vers l'ambiant est réalisée par convection forcée et par rayonnement lors du mouvement du véhicule, ou par convection naturelle et rayonnement lors de l'arrêt du véhicule.

De manière avantageuse, la première partie 1001 du dispositif de refroidissement 1000 comprend un écran thermique 1500 sur sa face qui n'est pas au regard des disques 2000, 2001, c'est-à-dire sur sa surface extérieure sur l'exemple illustré. Cet écran thermique 1500 est conformé pour minimiser les transferts de chaleur du dispositif de refroidissement 1000 vers le corps 3000 du rotor, typiquement vers la roue.

Selon un mode de réalisation, le corps 3000 présente une face externe formant une surface de réception 3002 configurée pour accueillir un élément mobile. Cet élément mobile peut par exemple être une bande de roulement tel qu'un pneu, une courroie ou une roue dentée. Préférentiellement, cet élément mobile recouvre longitudinalement au moins une partie du corps 3000.

Dans le cas où le corps 3000 présente une telle surface de réception 3002, cet écran thermique 1500 présente alors pour avantage de protéger cet élément mobile d'un échauffement excessif. De manière préférentielle et non limitative, cet écran est réalisé à l'aide de plusieurs fines tôles en acier inoxydable.

Comme illustré dans la figure 1, et de manière non limitative, toute la deuxième partie 1002 est décalée longitudinalement de la surface de réception 3002. Cela permet alors une évacuation de la chaleur vers l'ambiant et non vers l'élément mobile. Selon cette configuration, qui n'est qu'un exemple non limitatif de mise en oeuvre de la présente invention, l'élément mobile, par exemple un pneu, ne reçoit alors pas la chaleur dissipée par la deuxième partie 1002. Cela assure alors une amélioration de la durée de vie de cet élément mobile.

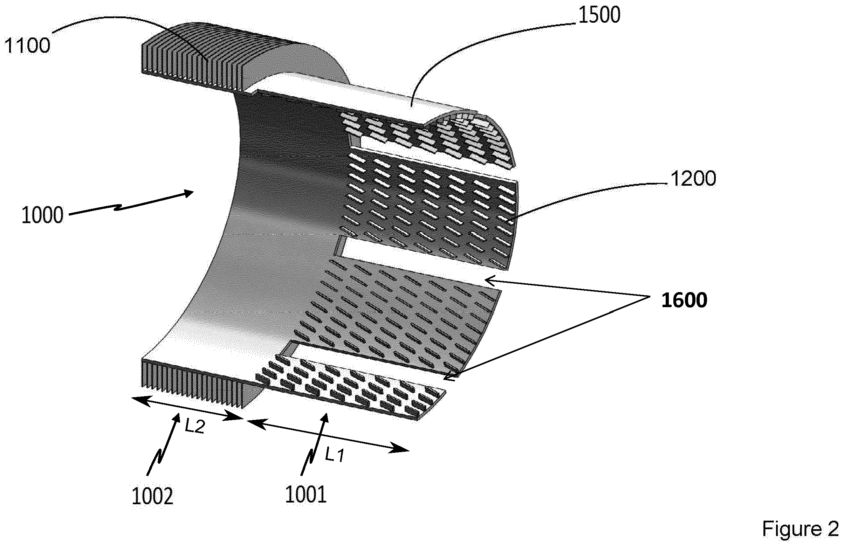

La figure 2 illustre dispositif de refroidissement 1000 retiré du système comprenant le frein. Dans ce mode de réalisation, le dispositif de refroidissement 1000 comprend des ailettes 1100 et des aubes 1200.

La première partie 1001 comprend les aubes 1200. La première partie 1001 présente des ouvertures 1600 pour le passage d'éléments d'entrainement des disques mobiles 2100, ces éléments d'entrainement étant par exemple des clavettes solidaires d'une face interne 3001 du corps 3000. Ces ouvertures 1600 s'étendent principalement selon la direction longitudinale.

La deuxième partie 1002 comprend une zone continue qui comporte les ailettes 1100.

L'anneau conducteur 1000 est fixé avec l'écran thermique à la jante de manière démontable grâce à des boulons afin d'être entrainé en rotation avec celle-ci.

Selon un mode de réalisation alternatif, le dispositif de refroidissement 1000 peut être réalisé à partir d'au moins l'un des matériaux suivants : alliages d'aluminium, aciers inoxydables, titane en encapsulation de graphite pyrolytique.

De manière très avantageuse, l'utilisation de graphite pyrolytique permet d'augmenter la conductivité thermique selon l'axe principal du dispositif de refroidissement 1000. Par exemple, un graphite pyrolytique encapsulé permet d'obtenir une conductivité thermique de 800 W/m.K selon l'axe principal, c'est-à-dire l'axe axial, du dispositif de refroidissement 1000, permettant ainsi d'augmenter de manière significative l'évacuation de la chaleur pendant la phase statique, la phase parking pour un aéronef par exemple.

L'encapsulation du graphite pyrolytique permet avantageusement de renforcer la robustesse du dispositif de refroidissement.

Alternativement, le graphite pyrolytique n'est pas encapsulé.

L'utilisation de graphite pyrolytique dans cette configuration permet de manière non limitative et à titre de simple exemple de gagner un facteur compris entre 1.2 et 5, avantageusement entre 2 et 4, et de préférence égal à 3 sur le temps de refroidissement en dessous de la température limite sur le cycle complet d'atterrissage, roulage et parking.

Le carbone pyrolytique est au moins disposé au niveau de la première partie 1001 du dispositif de refroidissement 1000. Avantageusement il est également disposé au niveau de la deuxième partie 1002 du dispositif de refroidissement 1000.

Ce mode de réalisation avec carbone pyrolytique encapsulé et disposé permet d'améliorer le transférer de chaleur par simple conduction thermique entre première 1001 et deuxième 1002 parties.

Dans ce mode de réalisation le dispositif de refroidissement 1000 est préférentiellement en graphite pyrolytique encapsulé dans de l'aluminium. Cela permet de limiter le poids du dispositif de refroidissement 1000.

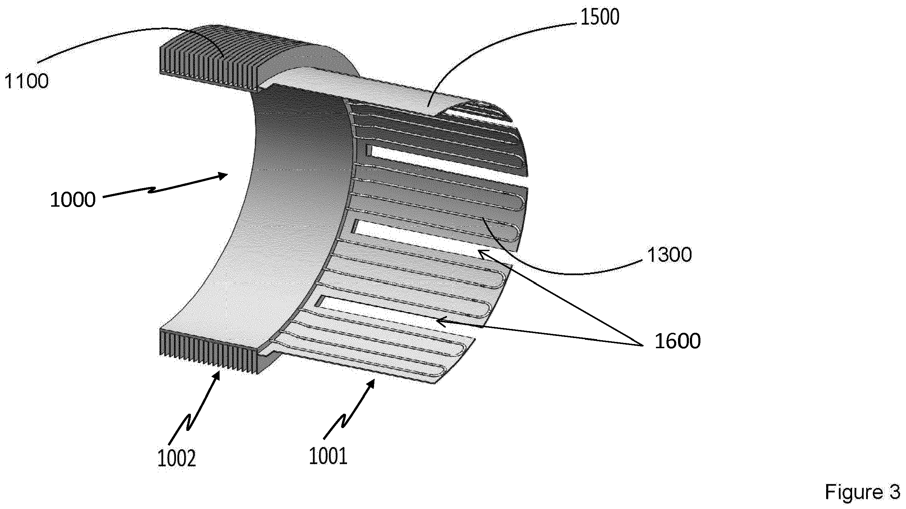

Selon un mode de réalisation illustré par la figure 3, le dispositif de refroidissement 1000 peut comprendre un caloduc 1300, de préférence un caloduc pulsé configuré pour transférer la chaleur de la première partie 1001 de l'anneau de conduction vers la deuxième partie 1002. L'arrangement des branches du caloduc pulsé 1300 est de préférence concentrique à l'anneau de conduction.

La première partie 1001 présente une portion proximale formant la jonction entre les première 1001 et deuxième 1002 parties, et une portion distale située à une extrémité du canal opposée à la portion proximale. La zone chaude 1320 du caloduc 1300 est située au niveau de la portion distale, tandis que la zone froide 1310 du caloduc est située au niveau de la portion proximale.

Ainsi une partie des canaux ou capillaires du caloduc 1300 est située dans la première partie 1001 du dispositif de refroidissement 1000 afin de capter la chaleur des disques. Cette partie des canaux forme la zone chaude 1320 du caloduc. Une autre partie des canaux du caloduc 1300 est partagée entre la première partie 1001 et la deuxième partie 1002 du dispositif de refroidissement 1000 afin de refroidir le fluide des canaux. Cette partie des canaux forme la zone froide 1310 du caloduc.

De préférence, les canaux du caloduc sont noyés dans l'épaisseur du dispositif de refroidissement 1000. Selon un autre mode de réalisation, ils sont disposés sur la face de la première partie qui est placée au regard des disques, c'est-à-dire la face interne sur l'exemple illustré. Avantageusement, la face externe du caloduc est-elle recouverte par l'écran thermique 1500.

Comme introduit précédemment, les caloducs fonctionne avec un fluide. Les fluides utilisables en tant que fluide caloduc sont bien connus de l'Homme du métier, et dépendent de la gamme de température de fonctionnement.

Pour réaliser un caloduc pulsé, les fluides envisageables sont le toluène de 70°C à 280°C, le naphtalène de 150°C à 400°C, l'eau de 50°C à 300°C et le sodium de 550°C à 1100°C.

Dans la présente invention, l'eau a été choisie comme fluide caloduc. Ce fluide offre les avantages suivants:
- La gamme de température utilisable est adaptée à l'utilisation de la présente invention dans le domaine des véhicules et des aéronefs, par exemple.
- L'eau ne présente pas de problème de toxicité ou d'inflammabilité en cas de fuite.
- En cas de surchauffe accidentelle, la pression peut monter à une valeur élevée en suivant la courbe de pression de vapeur saturante (pression critique de 220 bars pour une température de 374°C). Toutefois, le petit diamètre des canaux d'un caloduc pulsé rend celui-ci beaucoup plus robuste qu'un caloduc classique de plus gros diamètre.
- En cas de surchauffe accidentelle même jusqu'à 1000°C, l'eau ne se dissocie pas contrairement aux fluides organiques qui se décomposent dès 300°C à 400°C. Cette décomposition génère alors des gaz incondensables qui obéreraient le bon fonctionnement des caloducs après une surchauffe.

Selon un mode de réalisation, les matériaux d'enveloppe du caloduc 1300, donc les matériaux formant la première partie 1001 au moins du dispositif de refroidissement 1000 sont l'un parmi :
- Pour l'eau : cuivre, acier inoxydable (avec traitement permettant de limiter la production de gaz incondensable (hydrogène) obérant le fonctionnement du caloduc puisé).
- Pour le Toluène et le Naphtalène : aciers inoxydables.
- Pour des métaux liquides : aciers inoxydables, superalliages base nickel.

On notera que ces mêmes matériaux peuvent être utilisés pour un dispositif de refroidissement 1000 qui ne comporte pas de caloduc.

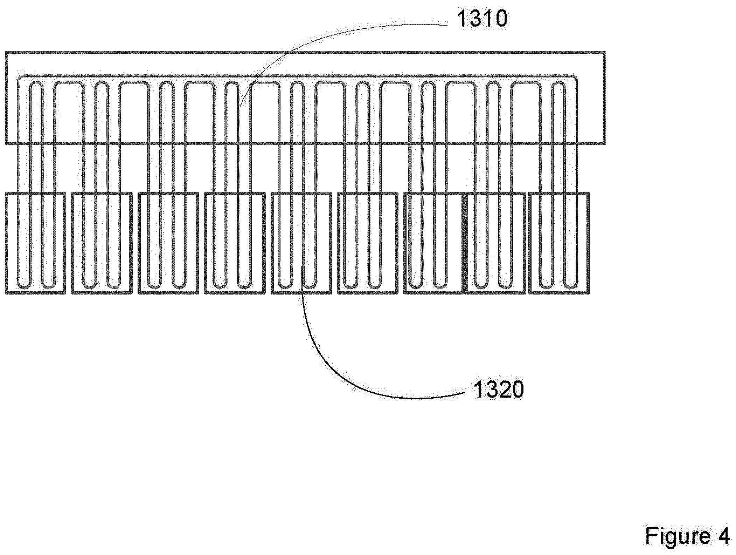

La figure 4 illustre une vue dépliée d'un exemple de réalisation d'un caloduc pulsé 1300. Sur cette figure les zones froides 1310, c'est-à-dire la portion proximale du caloduc 1300, et chaudes 1320, c'est-à-dire la portion distale du caloduc 1300, sont illustrées.

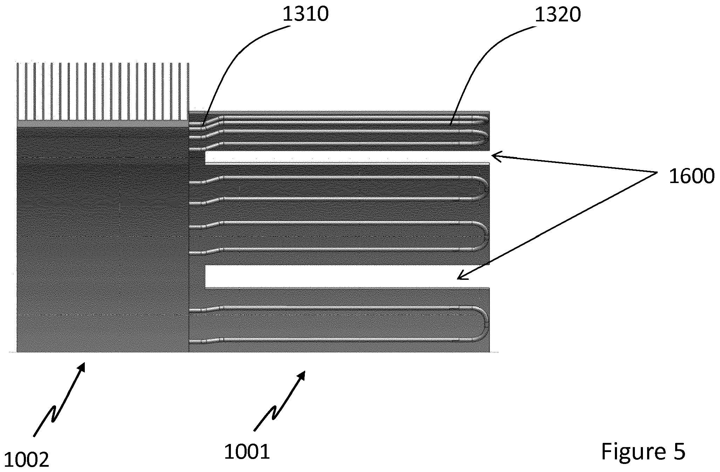

Comme illustré en figure 5 les zones chaudes 1320 peuvent être légèrement excentrées vers l'extérieur du dispositif de refroidissement 1000. Ainsi, les extrémités chaudes des canaux sont plus éloignées de l'axe de rotation que les zones froides 1310 qui sont disposées dans la deuxième partie 1002 du dispositif de refroidissement 1000.

Cela permet de faciliter le retour des bouchons liquide de la zone froide 1310 vers les zones chaudes grâce aux forces centrifuges lorsque le dispositif de refroidissement 1000 est en rotation (en phase d'atterrissage ou de taxi pour le cas d'un aéronef par exemple).

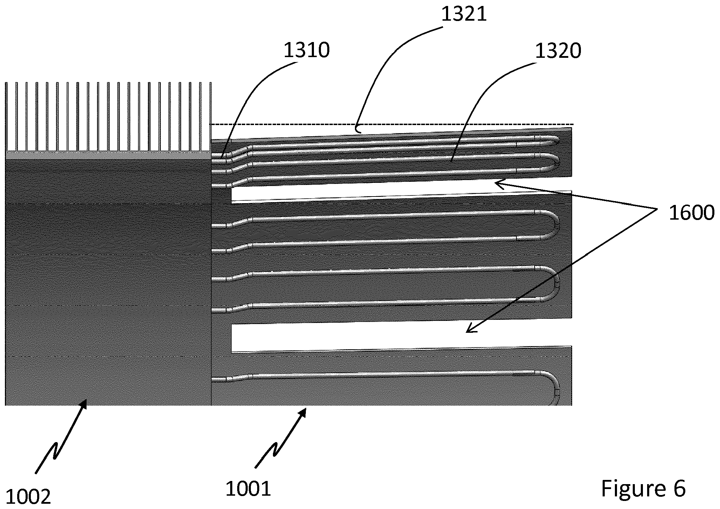

Comme illustré en figure 6, et selon un mode de réalisation, les zones chaudes 1320 peuvent être légèrement excentrées vers l'extérieur du dispositif de refroidissement 1000 et déployées en éventail et/ou en cône. Ainsi la portion distale du caloduc 1300 est plus éloignée de l'axe de rotation du rotor que la portion proximale. L'angle 1321 illustre justement ce déploiement de forme conique que présente alors, selon ce mode de réalisation, la première partie 1001 du dispositif de refroidissement 1000. Cet angle 1321 est avantageusement et selon un mode de réalisation compris entre 1° et 60°, de préférence entre 1° et 45° et de préférence entre 1 et 10°, et de manière préférentielle compris entre 3 et 10°.

Cet angle 1321 se mesure par exemple entre l'axe de rotation du rotor et l'enveloppe dans laquelle est comprise le caloduc, dans cet exemple l'enveloppe conique.

Ainsi, les extrémités chaudes des zones chaudes 1320 des canaux sont plus éloignées de l'axe de rotation que les zones froides 1310 qui sont disposées en partie dans la deuxième partie 1002 du dispositif de refroidissement 1000.

Cela permet de faciliter le retour des bouchons liquides de la zone froide 1310 vers les zones chaudes 1320 grâce aux forces centrifuges lorsque le dispositif de refroidissement 1000 est en rotation (en phase d'atterrissage ou de taxi pour le cas d'un aéronef par exemple).

Dans cette configuration, l'efficacité thermique de la présente invention peut être améliorée par l'aspect géométrique de la disposition des zones chaudes 1320 de sortes à permettre une meilleure circulation du fluide caloduc froid vers lesdites zones chaudes 1320, principalement vers l'extrémité de la portion distale. En effet, la force centrifuge, du fait de cette géométrie particulière en éventail et/ou en cône, force le fluide à se déplacer vers cette portion distale.

L'utilisation d'un caloduc confère notamment les avantages suivants :
- Une résistance thermique très réduite.
- Une masse de l'anneau très réduite.
- Un coût de fabrication moins élevé dans le cas d'une fabrication en série.

Des détails d'un exemple non limitatif de l'invention vont maintenant être décrits.

Le dispositif de refroidissement 1000 formant anneau de conduction a une longueur selon la direction longitudinale comprise entre 100 et 600 mm, avantageusement entre 250 et 450mm et de préférence égale à 350mm.

La longueur L1 de la première partie 1001 selon l'axe principale du dispositif de refroidissement 1000 est comprise entre 50 et 400 mm, avantageusement entre 150 et 300mm et de préférence égale à 225mm, et cette première partie présente un diamètre compris entre 100 et 800mm, avantageusement entre 300 et 600 et de préférence égal à 440mm. La longueur L2 de la deuxième partie 1002 selon l'axe principale du dispositif de refroidissement 1000 est comprise entre 50 et 200 mm, avantageusement entre 100 et 150 mm et de préférence égale à 125mm, et cette deuxième partie 1002 présente un diamètre compris entre 80 et 800mm, avantageusement entre 350 et 500 mm et de préférence égal à 430mm.

Selon un mode de réalisation, les ailettes 1100 peuvent être, par exemple, des ailettes en alliage d'aluminium ayant une épaisseur comprise entre 0.1mm et 10mm, avantageusement entre 0.5mm et 5mm et de préférence égale à 1mm. La hauteur de chaque ailette est comprise entre 5mm et 100mm, avantageusement entre 10mm et 50mm et de préférence égale à 25mm.

A titre d'exemple, la conductivité thermique des ailettes peut être comprise entre 100 et 800 W/m.K, avantageusement entre 200 et 600 W/m.K, et de préférence entre 150 W/m.K et 220 W/m.K.

Les ailettes peuvent présenter au moins une forme géométrique parmi : carré, trapézoïdale ou de toute forme permettant de minimiser leur masse par rapport à l'efficacité des échanges thermiques requise.

Les aubes ne sont pas en contact avec les disques 2000. La distance qui sépare les aubes 1300 des disques 2000 est comprise entre 2 et 20 mm, avantageusement entre 5 et 15 mm et de préférence égale à 10mm

L'invention n'est pas limitée aux modes de réalisations précédemment décrits et s'étend à tous les modes de réalisation couverts par les revendications.

## Revendications

1. Système comprenant un rotor comprenant un corps (3000) destiné à être entrainé en rotation autour d'une direction longitudinale, le système comprenant également un frein comprenant au moins un élément de friction fixe (2200) destiné à être solidaire d'un stator et au moins un élément de friction mobile (2100) solidaire du rotor et logé à l'intérieur du corps (3000), les éléments de friction fixe (2200) et mobile (2100) présentant chacun au moins une face principale et au moins une tranche, une face principale de l'élément de friction mobile (2100) étant disposée au regard d'une face principale de l'élément de friction fixe (2200), le frein étant configuré de manière à ce qu'au moins lorsque le frein est activé lesdites faces principales en regard soient en contact de manière à générer une friction;
**caractérisé en ce que** le système comprend au moins un dispositif de refroidissement (1000) comprenant au moins :
- une première partie (1001) formant un anneau conducteur centré sur la direction longitudinale, disposée entre le rotor et les éléments de friction fixe (2200) et mobile (2100), disposée au regard des tranches des éléments de friction fixe (2200) et mobile (2100) et configurée pour capter par rayonnement et/ou convection de la chaleur générée lors de la friction par les éléments de friction fixe (2200) et mobile (2100), et
- une deuxième partie (1002), solidaire et thermiquement couplée avec la première partie (1001), décalée selon la direction longitudinale par rapport aux éléments de friction fixe (2200) et mobile (2100) de manière à ne pas être au regard de la tranche des éléments de friction fixe (2200) et mobile (2100) et configurée pour évacuer par convection et/ou rayonnement vers l'air ambiant la chaleur captée par la première partie (1001).

2. Système selon la revendication précédente dans lequel le dispositif de refroidissement (1000) est solidaire du corps (3000) et rapporté sur le corps (3000).

3. Système selon la revendication précédente dans lequel le corps (3000) présente une face interne (3001) tournée au regard des éléments de friction et l'au moins un élément de friction solidaire du rotor est relié mécaniquement à ladite face interne (3001).

4. Système selon la revendication précédente dans lequel le système comporte au moins une clavette d'entrainement des éléments de friction, l'au moins une clavette étant solidaire de la face interne (3001) du corps (3000) et de l'au moins un élément de friction solidaire du rotor et dans lequel le dispositif de refroidissement (1000) comporte au moins une ouverture (1600) traversée par la clavette.

5. Système selon l'une quelconque des revendications précédentes dans lequel le corps (3000) présente une face externe formant une surface de réception (3002) configurée pour accueillir un élément mobile recouvrant longitudinalement au moins une partie du corps (3000).

6. Système selon la revendication précédente dans lequel la première partie (1001) est longitudinalement disposée au droit de la surface de réception (3002).

7. Système selon l'une quelconque des deux revendications précédentes dans lequel la deuxième partie (1002) est au moins en partie décalée longitudinalement par rapport à ladite surface de réception (3002).

8. Système selon l'une quelconque des trois revendications précédentes dans lequel l'élément mobile est pris parmi au moins : une bande de roulement, tel qu'un pneu, une courroie ou une roue dentée.

9. Système selon l'une quelconque des revendications précédentes dans lequel le corps (3000) est une jante de roue.

10. Système selon l'une quelconque des revendications précédentes dans lequel la première partie (1001) présente une surface extérieure revêtue d'un écran thermique (1500).

11. Système selon l'une quelconque des revendications précédentes comprenant un caloduc (1300) comprenant au moins un canal à l'intérieur duquel circule un fluide caloporteur, le canal s'étendant dans les première (1001) et deuxième (1002) parties du dispositif de refroidissement (1000), la première partie (1001) présentant au moins une portion proximale située au niveau du couplage entre la première (1001) et la deuxième (1002) parties, la première partie (1001) présentant également au moins une portion distale située à une extrémité de la première partie (1001) opposée à la portion proximale, le caloduc étant configuré de manière à permettre d'évacuer vers la deuxième partie la chaleur captée par la première partie.

12. Essieu de véhicule équipé d'un système selon l'une quelconque des revendications précédentes.

13. Avion ou véhicule roulant équipé d'un système selon l'une quelconque des revendications 1 à 11.

14. Machine tournante comprenant un arbre (3004) tournant couplé à un système selon l'une quelconque des revendications 1 à 11.

15. Dispositif de refroidissement (1000) pour frein à disques comprenant des éléments de friction fixe (2200) et mobile (2100), le dispositif s'étendant selon une direction longitudinale et comprenant :
- une première partie (1001) formant un anneau conducteur centré sur la direction longitudinale, configurée pour envelopper les disques du frein (2100, 2200), destinée à être disposée au regard des tranches des disques du frein (2100, 2200) et configurée pour capter par rayonnement et/ou convection de la chaleur générée par les disques (2100, 2200) lors de la friction, et
- une deuxième partie (1002), solidaire et thermiquement couplée avec la première partie (1001), décalée selon la direction longitudinale par rapport à la première partie (1001) et aux éléments de friction fixe (2200) et mobile (2100), configurée pour évacuer par convection et/ou rayonnement vers l'air ambiant la chaleur captée par la première partie (1001).

## Patentansprüche

1. System mit einem Rotor, der einen Körper (3000) aufweist, der um eine Längsrichtung rotierend mitgenommen werden soll, wobei das System ferner eine Bremse enthält, die zumindest ein festes Reibungselement (2200) aufweist, das fest mit einem Stator verbunden werden soll, sowie zumindest ein bewegliches Reibungselement (2100), das fest mit dem Rotor verbunden und innerhalb des Körpers (3000) aufgenommen ist, wobei das feste (2200) und das bewegliche (2100) Reibungselement jeweils zumindest eine Hauptfläche und zumindest eine Kante aufweist, wobei eine Hauptfläche des beweglichen Reibungselements (2100) einer Hauptfläche des feststehenden Reibungselements (2200) gegenüberliegend angeordnet ist, wobei die Bremse so ausgelegt ist, dass zumindest dann, wenn die Bremse aktiviert ist, die gegenüberliegenden Hauptflächen in Kontakt stehen, um eine Reibung zu erzeugen;
**dadurch gekennzeichnet, dass** das System zumindest eine Kühlvorrichtung (1000) enthält, die zumindest aufweist:
- einen ersten Teil (1001), der einen in der Längsrichtung zentrierten leitfähigen Ring bildet, zwischen dem Rotor und dem festen (2200) und dem beweglichen (2100) Reibungselement angeordnet ist, den Kanten des festen (2200) und des beweglichen (2100) Reibungselements gegenüberliegend angeordnet und dazu ausgelegt ist, durch Strahlung und/oder Konvektion die Wärme aufzunehmen, die bei der Reibung durch das feste (2200) und das bewegliche (2100) Reibungselement erzeugt wird, und
- einen zweiten Teil (1002), der fest mit dem ersten Teil (1001) verbunden und thermisch damit gekoppelt ist, in Längsrichtung bezüglich des festen (2200) und des beweglichen (2100) Reibungselements so verschoben ist, dass er nicht der Kante des festen (2200) und des beweglichen (2100) Reibungselements gegenüberliegt, und dazu ausgelegt ist, um durch Konvektion und/oder Strahlung die von dem ersten Teil (1001) aufgenommene Wärme zur Umgebungsluft abzuführen.

2. System nach dem vorangehenden Anspruch, wobei die Kühlvorrichtung (1000) fest mit dem Körper (3000) verbunden an dem Körper (3000) angebracht ist.

3. System nach dem vorangehenden Anspruch, wobei der Körper (3000) eine den Reibungselementen gegenüberliegend gerichtete Innenfläche (3001) aufweist und das zumindest eine fest mit dem Rotor verbundene Reibungselement mechanisch mit der Innenfläche (3001) verbunden ist.

4. System nach dem vorangehenden Anspruch, wobei das System zumindest einen Mitnehmerkeil zum Mitnehmen der Reibungselemente enthält, wobei der zumindest eine Keil fest mit der Innenfläche (3001) des Körpers (3000) und mit dem zumindest einen fest mit dem Rotor verbundenen Reibungselement verbunden ist und wobei die Kühlvorrichtung (1000) zumindest eine Öffnung (1600) aufweist, durch die sich der Keil hindurch erstreckt.

5. System nach einem der vorangehenden Ansprüche, wobei der Körper (3000) eine Außenfläche aufweist, die eine Aufnahmefläche (3002) bildet, die dazu ausgelegt ist, ein bewegliches Element aufzunehmen, das zumindest einen Teil des Körpers (3000) longitudinal überdeckt.

6. System nach dem vorangehenden Anspruch, wobei der erste Teil (1001) im Bereich der Aufnahmefläche (3002) longitudinal angeordnet ist.

7. System nach einem der beiden vorangehenden Ansprüche, wobei der zweite Teil (1002) zumindest teilweise longitudinal bezüglich der Aufnahmefläche (3002) versetzt ist.

8. System nach einem der drei vorangehenden Ansprüche, wobei das bewegliche Element ausgewählt ist aus einer Lauffläche, wie etwa einem Reifen, einem Riemen oder einem Zahnrad.

9. System nach einem der vorangehenden Ansprüche, wobei der Körper (3000) eine Radfelge ist.

10. System nach einem der vorangehenden Ansprüche, wobei der erste Teil (1001) eine mit einer Wärmeabschirmung (1500) überzogene Außenfläche aufweist.

11. System nach einem der vorangehenden Ansprüche, enthaltend ein Wärmerohr (1300), das zumindest einen Kanal aufweist, in welchem ein Wärmeträgerfluid strömt, wobei der Kanal sich in dem ersten (1001) und dem zweiten (1002) Teil der Kühlvorrichtung (1000) erstreckt, wobei der erste Teil (1001) zumindest einen proximalen Abschnitt aufweist, der im Bereich der Kopplung zwischen dem ersten (1001) und dem zweiten (1002) Teil liegt, wobei der erste Teil (1002) auch zumindest einen distalen Abschnitt aufweist, der an einem Ende des ersten Teils (1001) liegt, das dem proximalen Abschnitt entgegengesetzt ist, wobei das Wärmerohr so ausgelegt ist, dass die von dem ersten Teil aufgenommene Wärme zum zweiten Teil hin abgeführt werden kann.

12. Fahrzeugachse mit einem System nach einem der vorangehenden Ansprüche.

13. Flugzeug oder rollendes Fahrzeug mit einem System nach einem der Ansprüche 1 bis 11.

14. Rotationsmaschine mit einer drehenden Welle (3004), die mit einem System nach einem der Ansprüche 1 bis 11 gekoppelt ist.

15. Kühlvorrichtung (1000) für Scheibenbremsen, enthaltend ein festes (2200) und ein bewegliches (2100) Reibungselement, wobei die Vorrichtung sich in einer Längsrichtung erstreckt und enthält:
- einen ersten Teil (1001), der einen in Längsrichtung zentrierten leitfähigen Ring bildet und dazu ausgelegt ist, die Scheiben der Breme (2100, 2200) zu umgreifen, und dazu bestimmt ist, den Kanten der Bremsscheiben (2100, 2200) gegenüberliegend angeordnet zu werden und dazu ausgelegt ist, durch Strahlung und/oder Konvektion die Wärme aufzunehmen, die von den Scheiben (2100, 2200) bei der Reibung erzeugt wird, und
- einen zweiten Teil (1002), der fest mit dem ersten Teil (1001) verbunden und thermisch damit gekoppelt, in Längsrichtung bezüglich des ersten Teils (1002) und des festen (2200) und des beweglichen (2100) Reibungselements verschoben ist und dazu ausgelegt ist, um durch Konvektion und/oder Strahlung die von dem ersten Teil (1001) aufgenommene Wärme zur Umgebungsluft abzuführen.

## Claims

1. System comprising a body (3000) intended to be driven in rotation around a longitudinal direction, the system also comprising a brake comprising at least one fixed friction element (2200) intended to be secured to a stator and at least one mobile friction element (2100) secured to the rotor and housed inside the body (3000), the fixed (2200) and mobile (2100) friction elements each having at least one main face and at least one section, a main face of the mobile friction element (2200), the brake being configured such that at least when the brake is activated, said opposite main faces are in contact so as to generate a friction;
**characterised in that** the system comprises at least one cooling device (1000) comprising at least:
- one first part (1001) forming a conductive ring centred on the longitudinal direction, arranged between the rotor and the fixed (2200) and mobile (2100) friction elements, arranged opposite the sections of the fixed (2200) and mobile (2100) friction elements and configured to capture, by radiation and/or convection of the heat generated during the friction by the fixed (2200) and mobile (2100) friction elements, and
- a second part (1002), secured and thermally coupled with the first part (1001), offset according to the longitudinal direction with respect to the fixed (2200) and mobile (2100) friction elements, so as to not be opposite the section of the fixed (2200) and mobile (2100) friction elements and configured to evacuate by convection and/or radiation towards the ambient air, the heat captured by the first part (1001).

2. System according to the preceding claim, wherein the cooling device (1000) is secured to the body (3000) and returned on the body (3000).

3. System according to the preceding claim, wherein the body (3000) has an inner face (3001) rotated opposite the friction elements and the at least one friction element secured to the rotor is connected mechanically to said inner face (3001).

4. System according to the preceding claim, wherein the system comprises at least one pin for driving the friction elements, the at least one pin being secured to the inner face (3001) of the body (3000) and to the at least one friction element secured to the rotor and wherein the cooling device (1000) comprises at least one opening (1600) passed through by the pin.

5. System according to any one of the preceding claims, wherein the body (3000) has an outer face forming a receiving surface (3002) configured to receive a mobile element longitudinally covering at least one part of the body (3000).

6. System according to the preceding claim, wherein the first part (1001) is longitudinally arranged to the right of the receiving surface (3002).

7. System according to any one of the two preceding claims, wherein the second part (1002) is at least partially offset longitudinally with respect to said receiving surface (3002).

8. System according to any one of the three preceding claims, wherein the mobile element is taken from among at least: one tyre tread, such as a tyre, a belt or a sprocket.

9. System according to any one of the preceding claims, wherein the body (3000) is a wheel rim.

10. System according to any one of the preceding claims, wherein the first part (1001) has an outer surface coated with a thermal screen (1500).

11. System according to any one of the preceding claims comprising a heat pipe (1300) comprising at least one channel inside which a heat-transfer fluid circulates, the channel extending into the first (1001) and second (1002) parts of the cooling device (1000), the first part (1001) having at least one proximal portion situated at the level of the coupling between the first (1001) and the second (1002) parts, the first part (1001) also having at least one distal portion situated at an end of the first part (1001) opposite the proximal portion, the heat pipe being configured so as to make it possible to evacuate the heat captured by the first part towards the second part.

12. Vehicle axle equipped with a system according to any one of the preceding claims.

13. Aeroplane or rolling vehicle equipped with a system according to any one of claims 1 to 11.

14. Rotary machine comprising a rotating shaft (3004) coupled with a system according to any one of claims 1 to 11.

15. Cooling device (1000) for a disc brake comprising fixed (2200) and mobile (2100) friction elements, the device extending along a longitudinal direction and comprising:
- a first part (1001) forming a conductive ring centred on the longitudinal direction, configured to surround the discs of the brake (2100, 2200), intended to be arranged opposite sections of brake discs (2100, 2200) and configured to capture by radiation and/or convection of the heat generated by the discs (2100, 2200) during the friction, and
- a second part (1002), secured and thermally coupled with the first part (1001), offset along the longitudinal direction with respect to the first part (1001) and to the fixed (2200) and mobile (2100) friction elements, configured to evacuate by convection and/or radiation of the heat captures by the first part (1001) towards the ambient air.
